# EUROPEAN PATENT APPLICATION

(11) **EP 1 990 235 A1**
(43) Date of publication of application: **12.11.2008**
(21) Application number: 07107762.2
(22) Date of filing: 08.05.2007
(51) Int. Cl.: B60N 2/48

(54) **Motor-vehicle seat with a headrest provided with an anti-whiplash device**

(71) Applicant: Martur Sunger ve Koltuk Tesisleri Ticaret Sanayi A.S., 80670 Maslak Istanbul (TR)
(72) Inventor: Bracesco, Roberto, 10043, Orbassano (Torino) (IT)
(74) Representative: Notaro, Giancarlo

(57) **Abstract**

A motor-vehicle seat comprises a headrest (1) having a frame (6) which is pivotally mounted around a horizontal axis (7) to a headrest supporting structure (2), so that it can be moved between a position of normal use and a forwardly rotated position. A first spring (8) tends to bias the frame (6) of the headrest towards the forwardly rotated position. The frame (6) is held in its position of normal use by a primary lock bolt (13). A primary look bolt (13) is subjected to action of a second spring (16) which tends to bias it towards a disengagement position from a cooperating seat (15) of the headrest supporting structure (2). The primary lock bolt (13) is held in its engagement position by a secondary lock bolt (18). In case of a rear collision of the motor-vehicle, a member (29) for detecting the pressure applied against the backrest by the back of the occupant of the seat causes disengagement of the secondary lock bolt (18), by means of a Bowden cable transmission (25,26), with resulting disengagement of the primary lock bolt (13) and forward rotation of the headrest (1) under the action of the first spring (8).

## Description

The present invention relates to motor-vehicle seats of the type comprising:
- a backrest, including a backrest frame and a padding mounted on the backrest frame,
- a headrest supporting structure, which is connected to the backrest frame,
- a headrest, including a headrest frame which is provided with a headrest padding and which is mounted on said headrest supporting structure so that it can tilt around a transverse horizontal axis, so as to be movable between a position of normal use and a forwardly rotated position, and
- means for causing a movement of the headrest from its position of normal use to the forwardly rotated position following a rear collision of the motor-vehicle.

A motor-vehicle seat of the above indicated type is disclosed in US-A-5 934 750. In this known solution, the headrest comprises an inertial mass carried by the frame of the headrest, for causing a movement of the headrest from the position of normal use to the forwardly rotated position following a rear collision of the motor-vehicle, so as to avoid the so-called "whiplash" for the occupant of the seat or at least for reducing the harmful effects thereof.

The Applicant has also proposed devices of the above indicated type in pending European patent applications EP 07 103 793 and EP 07 103 796, where an activation by means of an inertial mass is provided for the forward movement of the headrest following a rear collision of the motor-vehicle.

The use of an activation device including an inertial mass may sometimes result not totally satisfactory from the standpoint of simplicity and cost of the manufacture and/or from the standpoint of quickness of activation.

The object of the present invention is that of providing a motor-vehicle seat of the above indicated type which is able to provide activation of the forward movement of the headrest following a rear collision of the motor-vehicle with means which are simple and reliable and efficient in operation.

In view of achieving this object, the invention provides a seat having the features which have been indicated at the beginning and further characterised in that:
- between the headrest frame and the headrest supporting structure there are interposed first spring means which bias the headrest frame towards a forwardly rotated position,
- on the headrest frame there is mounted a primary locking member which engages the headrest supporting structure so as to hold the headrest frame in its position of normal use, against the action of said first spring means,
- between the primary locking member and the headrest frame there are interposed second spring means which tend to bias the primary locking member towards a position disengaged from the headrest supporting structure,
- the headrest frame carries a secondary locking member which is elastically biassed to a position in which it holds the primary locking member in its locking condition, against the action of said second spring means,
- on the backrest frame there is mounted a detecting member for detecting a pressure applied by the back of the occupant of the seat against the backrest, and
- a mechanical transmission is interposed between said detecting member and said secondary locking member to bias the secondary locking member towards a position disengaged from the primary locking member when the back of the occupant is pressed against the backrest following a rear collision of the motor-vehicle.

The above mentioned detecting member for detecting the pressure applied against the backrest can be an efficient means for triggering the anti-whiplash mechanism, since, as shown by studies and tests on rear collisions of the motor-vehicle, it is the back of the occupant that moves rearwardly first, not his head, in the first instants after a collision.

In a preferred embodiment, the above mentioned mechanical transmission comprises a Bowden cable transmission and the above mentioned detecting member consists of a flexible element tensioned horizontally between two lateral supports of the backrest frame and having a central portion which is operatively connected to the above mentioned Bowden cable transmission. The flexible cable provides the advantage of enabling the adjustment of the vertical position of the headrest.

In case of a rear collision of the motor-vehicle, the back of the occupant deforms the above mentioned flexible element acting as detecting member, thus transmitting a tensile force to said secondary locking member by means of the flexible Bowden cable. The secondary locking member is thus disengaged from the primary locking member which therefore is free to become disengaged on its turn from the headrest supporting structure. The headrest, under the action of the first spring means, is thus free to move quickly forwardly providing adequate support to the head of the occupant before it begins to move rearwardly and thus preventing the user from being subjected to the harmful effects of the so called "whiplash".

In one embodiment, the headrest frame is pivotally mounted around said transverse horizontal axis, at an upper portion thereof. In an alternative embodiment, furthermore, the headrest frame is mounted on the headrest supporting structure so that it is able to tilt while also being constrained to move upwardly when it is displaced from the position of normal use to the forwardly rotated position. This solution enables an adequate support for the occupant's head for instance even when, following a rear collision, the backrest of the seat becomes much inclined backwardly and the trunk of the occupant tends to slide upwardly along the inclined backrest.

Further features and advantages of the invention will become apparent from the description which follows with reference to the annexed drawings, given purely by way of non limiting example, in which:
- figures 1, 2 are a diagrammatic cross-sectional view and a perspective view of a headrest forming part of the seat according to the invention,
- figure 3 is a diagrammatic perspective view of the backrest frame of the seat according to the invention, with the headrest mounted thereon, and
- figure 4 is a further perspective view end at an enlarged scale of a detail of the seat according to the invention.

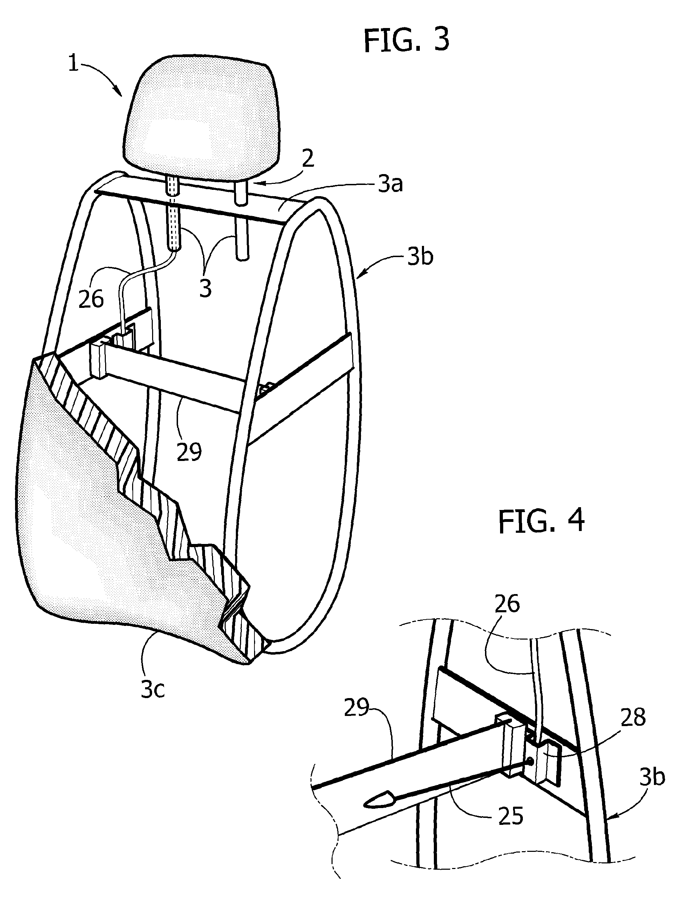

With reference to the drawings, numeral 1 generally designates a headrest comprising a supporting structure 2 of metal material which, in a way known per se, includes two vertical rods 3. The lower ends of the vertical rods 3 are received and locked within cooperating seats of a cross member 3a (figure 3) forming part of the frame 3b of the backrest of the seat, to which a backrest padding 3c is associated, provided with a covering cloth. The details relating to the coupling between the supporting rods 3 and the cross member 3a are not described nor shown herein, since they do not fall within the scope of the present invention and also because their deletion from the drawings renders the same simpler and easier to understand.

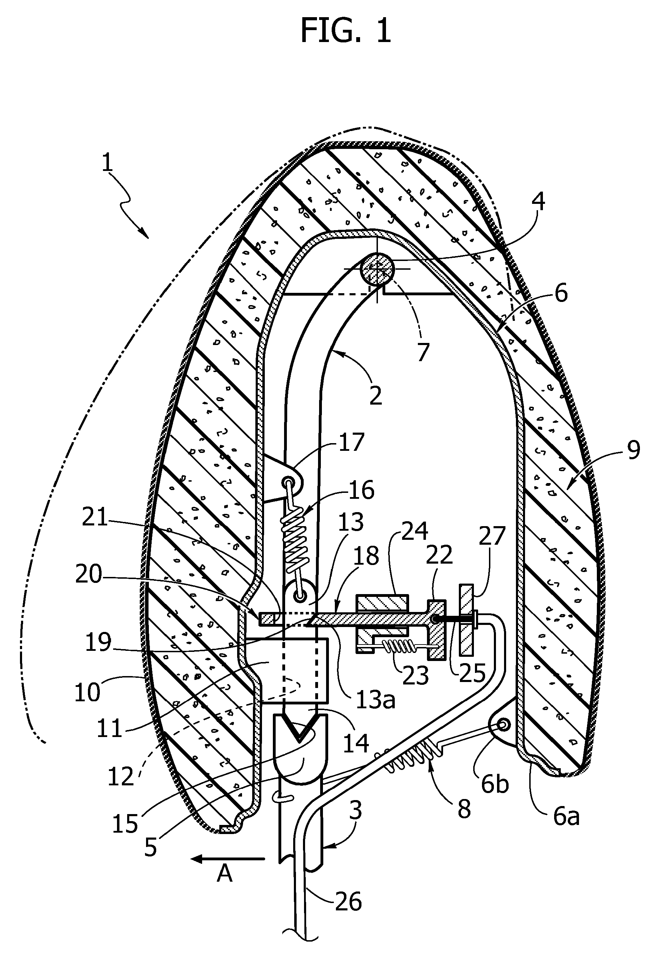

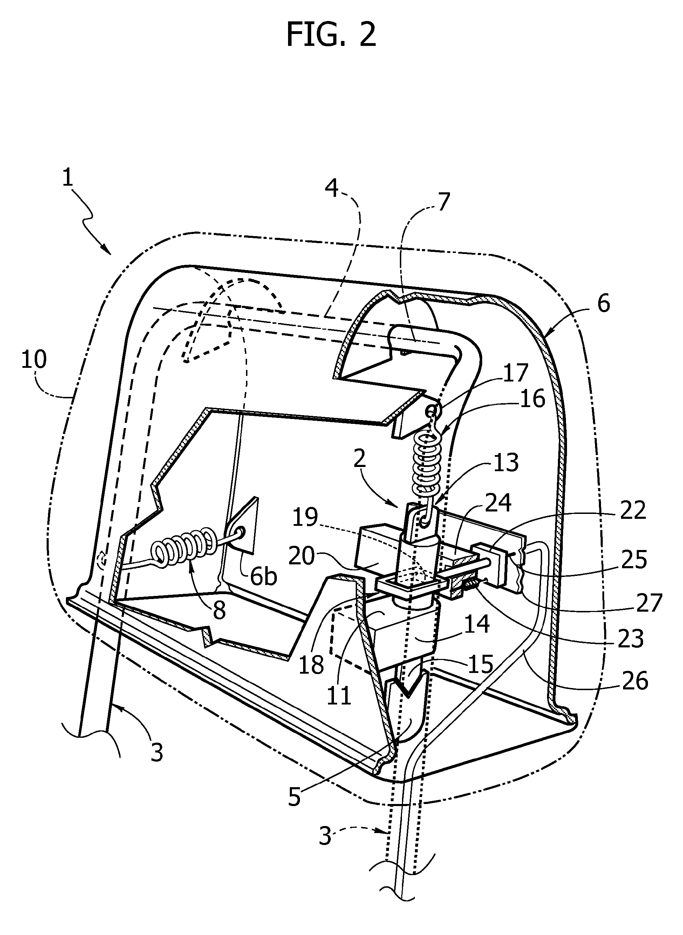

The two vertical rods 3 constituting the supporting structure 2 are connected at their upper ends by a cross member 4 (figures 1, 2). Furthermore, on one of these rods 3 there is fixed (for instance welded) an element 5 having a receiving seat 15, whose function will become apparent in the following.

Reference numeral 6 generally designates the frame of the headrest, which in the illustrated example is constituted by a hollow structure, of metal or plastic material, and open at the bottom so as to provide easy access to the inner parts of the headrest through its lower mouth 6a. The frame 6 is pivotally mounted on the upper cross-member 4 of the supporting structure 2 around a horizontal transverse axis 7.

In the present description, and in the following claims, by the expression "longitudinal direction" of the headrest a direction is meant which is parallel to the longitudinal direction of the motor vehicle in the mounted condition of the headrest on the motor vehicle seat. By the expression "horizontal transverse direction" reference is made to a horizontal direction orthogonal with respect to the above mentioned longitudinal direction. Furthermore, wherever in the present description reference is made to the "front" side or the "rear" side of the headrest, reference is made to the sides facing the front part and the rear part of the motor vehicle, respectively, in the mounted condition of the headrest on the motor vehicle seat.

Figure 1 shows the headrest according to the invention in its position of normal use. Starting from this position, the headrest is able to rotate around its upper articulation axis 7, with a forward movement (i.e. a movement in the direction of arrow A in figure 1) of its rear part. The headrest is provided with first spring means which in the illustrated example comprise a helical spring 8 connected at its ends to a respective vertical rod 3 of the fixed supporting structure 2, and to one ear 6b formed in the lower part of the rear portion of the headrest frame 6. In the illustrated condition, spring 8 is in a tensioned deformed condition, so that it tends to bias the frame 6 towards a forwardly rotated position, corresponding to a forward movement of its lower part.

By 9 there is generally designated the padded body, which, according to the conventional technique, covers the headrest frame 6 and is for instance made of foamed plastic. On its turn, body 9 is covered by a covering layer 10. In figure 1 there is shown by dotted line the position reached by the front surface of the headrest padding in the forwardly rotated condition.

Frame 6 is provided at the inside thereof with a body 11 which is fixed to the front wall of the frame 6 and has a guiding passage 12, having a vertical axis, within which there is slidably guided a lock bolt 13 constituting the primary locking member of the device. In the condition illustrated in figure 1, the lock bolt 13 is in its active position, in which its lower end 14 is engaged within the seat 15 formed in the receiving element 5.

Reference numeral 16 designates a helical spring constituting a second spring means which is interposed between the lock bolt member 13 and an ear 17 fixed to the wall of the frame 6. In the illustrated condition, the spring 16 is in a deformed tensioned condition, so that it tends to bias the lock bolt member 13 towards a raised position in which its lower end 14 is disengaged from seat 15.

Also with reference to figure 1, in the condition of normal use, the lock bolt member 13 is held in its illustrated operative position, against the action of spring 16, by a secondary lock bolt 18, constituting a secondary locking member of the device.

The secondary lock bolt 18 has an operative portion 19 which is constituted by an inner edge of a frame-like structure 20 having a central aperture 21 through which the primary lock bolt 13 is arranged. The frame-like structure 20 projects from an end portion 22 of the body of the secondary lock bolt 18. A spring 23 is interposed between the portion 22 of the lock bolt 18 and a support 24 fixed to the housing of the headrest and tends to hold the secondary lock bolt 18 in its engaged position, with the active portion 19 into engagement within a seat 13a of the primary lock bolt 13.

The secondary lock bolt 18 can be moved away from its engagement position shown in figure 1 by means of a Bowden cable transmission including a flexible metal cable 25 guided within a sheath 26. The end portion 22 of the secondary lock bolt 18 is secured to one end of the flexible cable 25 which projects from an end of the sheath 26 fixed to a support 27 projecting from the wall of the housing 6 of the headrest.

With reference to figure 3, the opposite end of the flexible cable 25 is secured to the central portion of a flexible strip 29, for example made of metal material or plastic material, which is tensioned horizontally between the two sides of the backrest frame, with its main face substantially parallel to the general plane of the backrest. Strip 29 acts as a member for detecting the pressure applied by the back of the occupant of the seat against the backrest. The flexible cable 25 is re-directed through a support 28 (figure 4) fixed to one side of frame 3b of the backrest, so that it extends along a horizontal transverse direction, substantially parallel to strip 29. The sheath 26 has its end adjacent to the strip 29 which is anchored to the support 28.

In the case of a rear collision of the motor-vehicle the back of the occupant pushes the strip 29 backwardly with a force greater than a threshold value, sufficient for generating a traction on the flexible cable 25 which overcomes the action of spring 23 and therefore causes movement of the secondary lock bolt towards its disengagement position (i.e. to the right with reference of figure 1) so as to free the primary lock bolt 13. The latter thus moves rapidly upwardly, under the action of spring 16, disengaging itself from the seat 15 and leaving the headrest free to immediately rotate forwardly, under the action of spring 8. The forward movement of the backrest ensures the required support for the head of the occupant, thus avoiding that it is subjected to the so called whiplash as a result of the rear collision.

Preferably, furthermore, to the unit according to the invention there is associated a device able to lock the headrest in its forwardly rotated position after a collision. For instance, this device may consist of a system of articulated levers which reaches a no-return condition in the forwardly rotated position of the headrest, preventing a return thereof to the normal position of use.

The configuration and the arrangement of the Bowden cable transmission which is illustrated herein purely by way of example may of course amply vary. It is thus possible for instance that the portion of the flexible cable associated to the backrest extends throughout the whole with of the backrest. It is also possible to use the flexible cable 25 directly as a detecting member for detecting the pressure, without using the strip 29. In any case, the pressure detecting member may also be configured and arranged in a way different from what has been shown purely by way of example. It would be thus possible, for instance, that a detecting member is provided in form of an oscillating lever adapted to be rotated as a result of the pressure applied by the back of the occupant. Similarly, it is also possible to make use of any other type of mechanical transmission, including also a transmission which does not make use of a flexible cable, in order to transmit the movement of the pressure detecting member to the secondary lock bolt.

Naturally, while the principle of the invention remains the same, the details of construction and the embodiments may widely vary with respect to what has been described and illustrated purely by way of non limiting example, without departing from the present invention.

For instance, the Bowden cable transmission could be arranged to be normally under tension, thus holding the secondary lock bolt in an engagement position against the action of a spring, whereas the pressure detecting member could be provided so that it causes cutting of the cable as a result of activation thereof, thus enabling the automatic triggering of the anti-whiplash mechanism.

## Claims

1. Motor-vehicle seat, comprising:
- a backrest including a backrest frame (3b) and a padding (3c) associated to the frame (3b),
- a headrest supporting structure (2) connected to the frame (3b) of the backrest,
- a headrest (1) including a headrest frame (6) which is provided with a headrest padding (9) and which is mounted on said headrest supporting structure (2) so that it can tilt around a transverse horizontal axis (7) so that it is movable between a position of normal use and forwardly rotated position, and
- means for causing a movement of the headrest (1) from its position of normal use to its forwardly rotated position following a rear collision of the motor-vehicle,
**characterised in that**:
- between the headrest frame (6) and the headrest supporting structure (2) there are interposed first spring means (8) which bias the headrest frame towards the forwardly rotated position,
- on the headrest frame (6) there is mounted a primary locking member (13) which engages the supporting structure (2) so as to hold the frame of the headrest (6) in its position of normal use, against the action of said first springs means (8),
- between the primary locking member (13) and the frame of the headrest (6) there are interposed second spring means (16) tending to bias the primary locking member (13) towards a position disengaged from the headrest supporting structure (2),
- the headrest frame (6) carries a secondary locking member (18) which is elastically biased to a position in which it holds the primary locking member (13) in its locking condition, against the action of said second spring means (16), and
- on the backrest frame (3b) there is mounted a detecting member (29) for detecting a pressure applied by the back of the occupant of the seat against the backrest, and
- a mechanical transmission (25, 26) is interposed between said detecting member (29) and said secondary locking member (18), to bias the secondary locking member 18 towards a position disengaged from the primary locking member (13) when the back of the occupant of the seat is pressed against the back of the seat

2. Seat according to claim 1, **characterised in that** the headrest frame (6) is pivotally mounted around said horizontal transverse axis (7) at an upper portion thereof.

3. Seat according to claim 1, **characterised in that** said first spring means (8) comprise at least one spring interposed between the headrest supporting structure (2) and a lower portion of the headrest frame (6) and tending to bias this lower portion forwardly.

4. Seat according to claim 1, **characterised in that** the primary locking member (13) consists of a lock bolt which is vertically slidably mounted within a guiding body (11) secured to the headrest frame (6) and having an active lower end (14) adapted to cooperate with a seat (15) formed in a receiving element (5) forming part of the headrest supporting structure (2).

5. Seat according to claim 4, **characterised in that** said second spring means (16) comprise at least one spring interposed between said primary lock bolt member (13) and the frame (6) of the headrest tending to bias this primary lock bolt member (13) upwardly.

6. Seat according to claim 1, **characterised in that** said secondary locking member (18) consists of a lock bolt portion (19) defined by an edge of a frame-like structure (20) defining a central aperture (21) through which said primary locking member (13) is arranged, said edge (19) being adapted to cooperate with a seat (13a) formed in the body of said primary locking member (13).

7. Seat according to claim 1, **characterised in that** said frame (6) of the headrest has a hollows structure which is open at the bottom, so as to have a lower mouth (6a) for access to the inner members of the headrest.

8. Seat according to claim 1, **characterised in that** said mechanical transmission (25, 26) is constituted by a Bowden cable transmission.

9. Seat according to claim 8, **characterised in that** said detecting member consists of a flexible member (29) tensioned horizontally between the two sides of the frame (3b) of the backrest and **in that** said Bowden cable transmission comprises a flexible cable (25) having one end connected to said detecting flexible member (29) and the opposite end connected to said secondary lock bolt member (18), the arrangement being such that when the back of the occupant of the seat applies a pressure against the backrest which is greater than a threshold value, said flexible detecting member (7) is deformed to an extent sufficient to apply a tension to the flexible cable (25) sufficient to bring the secondary lock bolt member (18) to its disengagement position, against the action of auxiliary spring means (23).

10. Seat according to claim 1, **characterised in that** the frame of the backrest (6) is mounted on the supporting structure (2) of the headrest so that it is able to tilt and at the same time it is constrained to move upwardly when it is brought from the position of normal use to the forwardly rotated position.

11. Seat according to claim 9, **characterised in that** said flexible detecting member is a strip tensioned among the two sides of the backrest frame (3b) with its main surface parallel to the general plane of the backrest.

12. Seat according to claim 8, **characterised in that** said pressure detecting member is constituted by a portion of a flexible cable of said Bowden cable transmission.

13. Seat according to claim 8, **characterised in that** said flexible cable transmission comprises a flexible cable which is normally under tension so as to hold said secondary locking member in its engagement position, said pressure detecting member being adapted to cause cutting of said flexible cable as a result of a rear collision of the motor-vehicle.

## Amended claims

### Amended claims in accordance with Rule 137(2) EPC.

**1.** Motor-vehicle seat, comprising:
- a backrest including a backrest frame (3b) and a padding (3c) associated to the frame (3b),
- a headrest supporting structure (2) connected to the frame (3b) of the backrest,
- a headrest (1) including a headrest frame (6) which is provided with a headrest padding (9) and which is mounted on said headrest supporting structure (2) so that it can tilt around a transverse horizontal axis (7) so that it is movable between a position of normal use and forwardly rotated position, and
- means for causing a movement of the headrest (1) from its position of normal use to its forwardly rotated position following a rear collision of the motor-vehicle,
wherein:
- between the headrest frame (6) and the headrest supporting structure (2) there are interposed first spring means (8) which bias the headrest frame towards the forwardly rotated position,
- on the headrest frame (6) there is mounted a primary locking member (13) which engages the supporting structure (2) so as to hold the frame of the headrest (6) in its position of normal use, against the action of said first springs means (8),
- between the primary locking member (13) and the frame of the headrest (6) there are interposed second spring means (16),
**characterised in that**:
- said second spring means (16) tend to bias the primary locking member (13) towards a position disengaged from the headrest supporting structure (2),
- the headrest frame (6) carries a secondary locking member (18) which is elastically biased to a position in which it holds the primary locking member (13) in its locking condition, against the action of said second spring means (16), and
- on the backrest frame (3b) there is mounted a detecting member (29) for detecting a pressure applied by the back of the occupant of the seat against the backrest,
- a mechanical transmission (25, 26) is interposed between said detecting member (29) and said secondary locking member (18), to bias the secondary locking member 18 towards a position disengaged from the primary locking member (13) when the back of the occupant of the seat is pressed against the back of the seat, and
- said secondary locking member (18) consists of a lock bolt portion (19) defined by an edge of a frame-like structure (20) defining a central aperture (21) through which said primary locking member (13) is arranged, said edge (19) being adapted to cooperate with a seat (13a) formed in the body of said primary locking member (13).

**2.** Seat according to claim 1, **characterised in that** the headrest frame (6) is pivotally mounted around said horizontal transverse axis (7) at an upper portion thereof.

**3.** Seat according to claim 1, **characterised in that** said first spring means (8) comprise at least one spring interposed between the headrest supporting structure (2) and a lower portion of the headrest frame (6) and tending to bias this lower portion forwardly.

**4.** Seat according to claim 1, **characterised in that** the primary locking member (13) consists of a lock bolt which is vertically slidably mounted within a guiding body (11) secured to the headrest frame (6) and having an active lower end (14) adapted to cooperate with a seat (15) formed in a receiving element (5) forming part of the headrest supporting structure (2).

**5.** Seat according to claim 4, **characterised in that** said second spring means (16) comprise at least one spring interposed between said primary lock bolt member (13) and the frame (6) of the headrest tending to bias this primary lock bolt member (13) upwardly.

**6.** Seat according to claim 1, **characterised in that** said frame (6) of the headrest has a hollows structure which is open at the bottom, so as to have a lower mouth (6a) for access to the inner members of the headrest.

**7.** Seat according to claim 1, **characterised in that** said mechanical transmission (25, 26) is constituted by a Bowden cable transmission.

**8.** Seat according to claim 8, **characterised in that** said detecting member consists of a flexible member (29) tensioned horizontally between the two sides of the frame (3b) of the backrest and **in that** said Bowden cable transmission comprises a flexible cable (25) having one end connected to said detecting flexible member (29) and the opposite end connected to said secondary lock bolt member (18), the arrangement being such that when the back of the occupant of the seat applies a pressure against the backrest which is greater than a threshold value, said flexible detecting member (7) is deformed to an extent sufficient to apply a tension to the flexible cable (25) sufficient to bring the secondary lock bolt member (18) to its disengagement position, against the action of auxiliary spring means (23).

**9.** Seat according to claim 1, **characterised in that** the frame of the backrest (6) is mounted on the supporting structure (2) of the headrest so that it is able to tilt and at the same time it is constrained to move upwardly when it is brought from the position of normal use to the forwardly rotated position.

**10.** Seat according to claim 8, **characterised in that** said flexible detecting member is a strip tensioned among the two sides of the backrest frame (3b) with its main surface parallel to the general plane of the backrest.

**11.** Seat according to claim 7, **characterised in that** said pressure detecting member is constituted by a portion of a flexible cable of said Bowden cable transmission.
